Europäisches Patentamt

European Patent Office

Office européen des brevets

(11) Publication number: **0 264 277 B1**

(12) **EUROPEAN PATENT SPECIFICATION**

(45) Date of publication of patent specification: **02.09.92**

(51) Int. Cl.⁵: **B42D 15/10**, B42D 209/00, B42D 101/00, B42D 105/00, B42D 221/00, B42D 223/00, G06K 19/08, G03H 1/02

(21) Application number: **87309101.1**

(22) Date of filing: **15.10.87**

(54) **Optical recording card having hologram contained therein and method of producing the same.**

(30) Priority: **15.10.86 JP 244995/86**
**24.10.86 JP 163468/86 U**

(43) Date of publication of application:
**20.04.88 Bulletin 88/16**

(45) Publication of the grant of the patent:
**02.09.92 Bulletin 92/36**

(84) Designated Contracting States:
**AT BE CH DE FR GB IT LI NL SE**

(56) References cited:
EP-A- 0 031 525          EP-A- 0 145 481
EP-A- 0 193 334          EP-A- 0 194 042
DE-A- 3 225 485          GB-A- 2 129 739
US-A- 3 755 935          US-A- 4 014 602

(73) Proprietor: **Kyodo Printing Co., Ltd.**
**14-12, Koishikawa 4-chome Bunkyo-ku**
**Tokyo 112(JP)**

(72) Inventor: **Fukushima, Yoichi**
**14-12, 4-chome Koishikawa**
**Bunkyo-ku Tokyo 112(JP)**
Inventor: **Fujita, Minoru**
**14-12, 4-chome Koishikawa**
**Bunkyo-ku Tokyo 112(JP)**
Inventor: **Kakinuma, Yuji**
**14-12, 4-chome Koishikawa**
**Bunkyo-ku Tokyo 112(JP)**
Inventor: **Haga, Toshio**
**14-12, 4-chome Koishikawa**
**Bunkyo-ku Tokyo 112(JP)**

(74) Representative: **Charlton, Peter John et al**
**Elkington and Fife Prospect House 8 Pembroke Road**
**Sevenoaks, Kent TN13 1XR(GB)**

## Description

The present invention relates to a certification card and more particularly to an optical recording card having a hologram contained therein.

In recent years cards having a variety of information recorded have been widely used as ID cards, cash cards, bank cards or the like.

This kind of card is required to record various information such as personal data and issuance company data. Formerly such information was recorded in the form of visual characters and symbols and more recently in the form of electrical signals using magnetism. However there is need to take action to prevent alteration of data and to handle an increased amount of information.

Accordingly, optical recording cards to which an optical recording technique is applied have recently been developed. These optical recording cards have information recording media each of which includes an optical reflective surface.

Such a card is called a optical recording card. Such a card is typically constructed in such a manner that a card front board and a rear board made of plastic material are adhered to one another and an optical recording layer is interposed therein. The optical recording layer is so constructed that its optical reflective surface has an optical reflective layer. The optical reflective surface is formed with various pits in it and the pits are detected by difference in optical reflectivity with laser beams so that data contained therein are read.

On the other hand utilization of a hologram for a certification card has already been proposed (refer to for instance, official gazette of Japanese Laid-Open Patent No. 6782/1976 and official gazette of Japanese Published Patent No. 176982/1976). A hologram enables information concerning amplitude and phase of a light wave from an object to be recorded simultaneously. When the hologram is exposed to light again, a light wave having the same amplitude and phase as those of light from the original object can be reproduced and thereby the three-dimensional image can be reproduced. This phenomenon can be applied to certification card whereby the appearance of the card can be improved, information contained in the card has a highly increased density and it can be expected that falsification and alteration of the card are achieved only with much difficulty. In particular, due to the fact that a technique for producing hologram by press operation on transparent board has been developed it becomes possible to carry out mass production of holograms and moreover utilization of the hologram can be achieved easily.

Accordingly, since a certification card can be provided with both an optical recording portion and a hologram portion, the amount of information to be contained in a card can be greatly increased in density, and falsification and alteration of the card is achieved only with much difficulty.

However, if the optical card and hologram portion are prepared separately and they are attached to the card, the result is that the card becomes complicated in structure, the number of components and manhours required to make the card increase in a simple additive manner and therefore the card is produced at a high cost.

EP-A-0193334 discloses optical cards with optical recording layers alone, GB-A-2129739 discloses methods and products for reproducing light diffraction patterns by means of holograms using transfer means.

The present invention has been made with the foregoing background in mind and its object resides in providing an inexpensive certification card having an optical recording portion and a hologram portion contained therein wherein the card has a highly dense recording, the difficulty of falsification and alteration is increased, the structure is simple, there is a reduced number of components and a reduced number of manhours required to make the card, as well as a method of producing the aforesaid certification card.

To accomplish the above object the invention provides an optical recording card having a hologram contained therein comprising:

a transparent card front board;

an optical recording portion building area located on the rear surface of the front board including an optical recording pattern layer having optical information pits;

a hologram portion building area;

a card rear board adapted to be adhered to said card front board to sandwich said optical recording pattern layer and said hologram portion building area;

characterized in that:

said hologram portion building area is formed with a pattern of concavity and convexity in the form of an interference fringe in a hologram;

said hologram portion building area is located on the rear surface of the card front board; and

a reflective metal layer is deposited on the rear of said front board to cover said hologram portion building area and to comprise reflecting portions of said optical recording portion building area.

Accordingly, there is also provided a method of producing an optical recording card having a hologram contained therein, comprising the steps of:

die pressing a pattern of concavity and convexity in the form of an interference fringe in a hologram portion building area on the rear surface of a transparent front substrate, said rear surface also containing an optical recording portion building area;

forming a reflective metal film over said hologram portion building area and said optical recording portion building area;

coating a resist over said reflective metal film;

patterning said resist at said hologram portion building area and said optical recording portion building area by irradiation through a mask;

forming said optical recording pattern layer and reflective metal layer by etching;

removing residual resist;

adhering said inside surface of the front substrate to a rear substrate so as to sandwich said optical recording pattern layer and said reflective metal layer; and

die punching to a card shape.

Accordingly, there is further provided a method of producing an optical recording card having a hologram contained therein, comprising the steps of:

die pressing a pattern of concavity and convexity in the form of an interference fringe in a hologram portion building area on the rear surface of a transparent front substrate, said rear surface also containing an optical recording portion building area;

forming optical information pits of an optical recording pattern layer by use of paint or ink transparent to visible light but absorbent for ultra-violet or infrared light;

forming a reflective metal film over said hologram portion building area and said optical recording portion building area by vacuum evaporation;

adhering said inside surface of the front substrate to a rear substrate so as to sandwich said optical recording pattern layer and said reflective metal layer; and

die punching to a card shape.

Embodiments of the present invention will be described with reference to the following drawings in which;

Fig. 1 is a perspective view of an optical recording card 1b having a hologram contained therein in accordance with an embodiment of the present invention.

Fig. 2 is a fragmental enlarged side view of an optical recording card 1b having a hologram contained therein.

Fig. 3 is a fragmental enlarged side view of the optical recording card 1b having a hologram contained therein in accordance with an embodiment of the present invention.

Fig. 4 is a plan view of the optical recording card 1b having a hologram contained therein as shown in Fig. 3.

Figs. 5 (a) to (j) illustrate the steps of producing the optical recording card 1b having a hologram contained therein as shown in Fig. 3.

Fig. 6 is an enlarged side view of an optical recording card 1d having a hologram contained therein in accordance with another embodiment of the present invention.

Fig. 7 is a plan view of the optical recording card 1d having a hologram contained therein as shown in Fig. 6.

Figs. 8 (a) to (h) illustrate the steps of producing the optical recording card 1d having a hologram contained therein as shown in Fig. 6.

Fig. 9 is an enlarged side view of an optical recording card 1e having a hologram contained therein in accordance with another embodiment of the present invention.

Fig. 10 is a plan view of the optical recording card having hologram contained therein as shown in Fig. 9.

Figs. 11 (a) to (h) illustrate the steps of producing the optical recording card having a hologram contained therein as shown in Fig. 9, and

Fig. 12 is an enlarged side view of an optical recording card having a hologram contained therein in accordance with a further another embodiment of the present invention.

Specific embodiments of the present invention are described in greater detail hereunder with reference to the accompanying drawings.

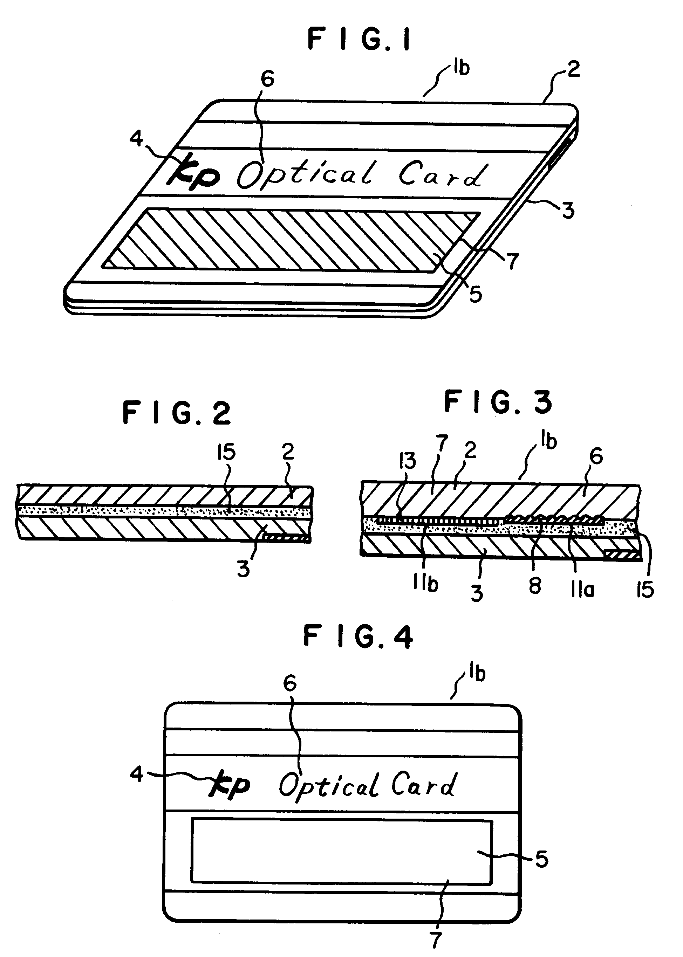

In Fig. 1 and 2, reference numeral 1b designates an optical recording card having a hologram included therein (hereinafter referred to as optical recording card for simplicity). The optical recording card 1b includes a hologram portion 4 in a hologram portion building area 6 and an optical recording portion 5 in an optical recording portion building area 7 between two card boards, that is, a front board 2 and a rear board 3. The front board 2 is constituted by transparent resin. In particular, the front board 2 is constituted by resin having excellent transparency such as polycarbonate, polymethylmethacrylate, epoxy or the like, while the rear board 3 is constituted by polycarbonate, polymethylmethacrylate, polyvinylchloride, epoxy, polyethyleneterephthalate or the like.

As shown in Fig. 3 and 4, a pattern of concavity and convexity 8 representing interference fringes of hologram is formed on the rear surface of the front board 2 in the hologram portion building area 6 and moreover the surface of the concavity and convexity is covered with a reflective metallic film 11a made of metallic material such as Al, Au, Ag, Cu, Ni, Te, Bi or the like.

On the other hand, the inside surface of the front board is covered with an optical recording pattern layer 11b comprising a reflective metallic film 11a, such as a deposited aluminum film, in the optical recording portion building area 7. The optical recording pattern layer 11b is formed with a number of optical information pits 13 which are arranged in accordance with a predetermined pattern. No reading light is reflected in the thus formed optical information pits 13 but reading light is reflected by the residual part of the optical recording pattern layer 11b. Information can be reproduced according to the presence and absence of reflected reading light. The surface of the reflective metallic film 11a and the optical recording pattern layer 11b are covered by the rear board 3. A layer of polyester based or urethane based thermoplastic adhesive 15 is interposed therebetween.

When the hologram portion building area 6 is irradiated with light through the surface of the front board of the optical recording card as constructed in the above-described manner, the light is diffracted in several directions due to the presence of the concavity and convexity 8. Among the thus diffracted light there is a light wave having the same amplitude and phase as those of the previously recorded light wave, so that the recorded image can be reproduced. Similarly, when the optical recording portion building area 7 is irradiated with a reading light through the surface of the front board 2, the content recorded in the optical recording pattern layer 11b in the optical recording portion building are 7 can be read.

Since the optical recording card 1b as constructed in that way has two recording portions comprising hologram portion 4 and an optical recording portion 5, the result is that the density of information which can be contained in a certification card will greatly increase. Further falsification or alteration of the certification card can only be achieved by working on either one or both of the hologram portion 4 and the optical recording portion 5. Since working on one of them results in breakage or damage of the other one and it is difficult to treat or process them manually, falsification and alteration of the card can be prevented.

Also the reflective metallic film 11a on the hologram portion 4 can be formed by the same vacuum deposition steps as those for the optical recording pattern layer 11b, comprising reflective metallic film required for optical recording. Thus, in spite of the fact that a hologram is added to an optical card, the whole structure does not become complicated, the number of components is not doubled and similarly the number of production steps does not increase in a simple additive manner.

A method of producing the optical recording card is described below:

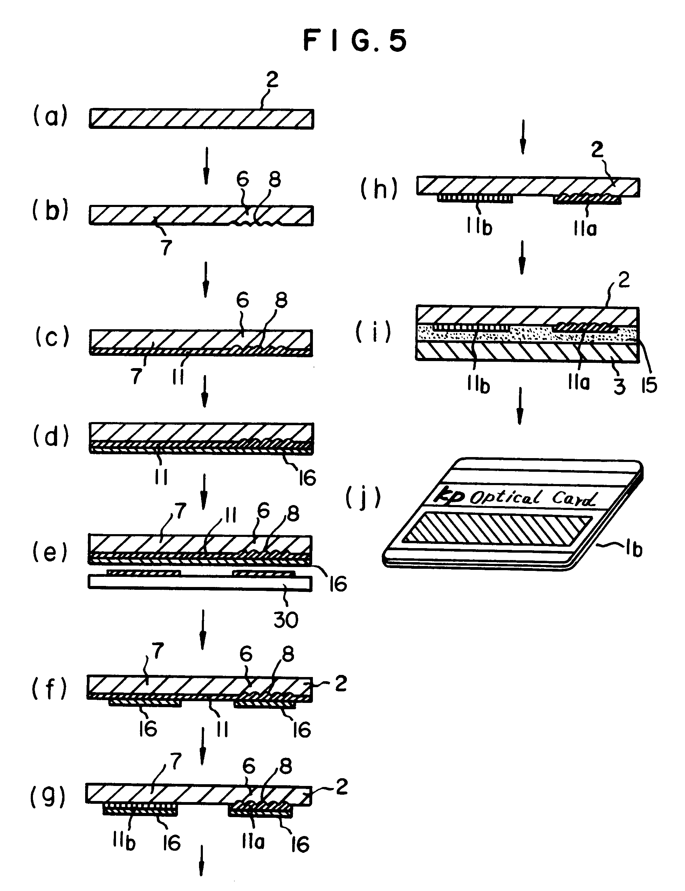

(1) When the optical recording card 1b as shown in Figs. 3 and 4 is produced, a front board substrate, which will go to form a number of front boards 2, constituted by transparent thermoplastic resin such as polycarbonate, polymethylmethacrylate (PMMA) or the like is firstly provided as shown in Fig. 5 (Fig. 5(a)).

(2) The pattern of concavity and convexity 8 which represents interference fringes of hologram are die pressed in the hologram portion building areas 6 of the front board substrate by hot stamping (Fig. 5(b)). It should be noted that front board substrates having patterns of concavity and convexity of the type resulting from steps (1) and (2) may be produced by injection molding.

(3) Next, a metallic film 11, such as an aluminium film, is formed over the hologram portion building areas 6 and the optical recording portion building areas 7 of the rear surface of the front board substrate by vacuum evaporation at a vacuum of $266.64 \times 10^{-5}$ Pa ($2 \times 10^{-5}$ Torr) and evaporation speed of $2 \times 10^{-9}$ m/s (20 Å/sec), until the aluminium film has a thickness of $10^{-7}$ m (1000 Å) (Fig. 5(C)).

(4) Next, the metallic film 11 on the front board substrate is spin coated with photo resist 16 (MICROPOSIT (R) PHOTO RESIST 1400-17 produced by Shipley Corp.) at 3000 rpm for 30 sec. and then the thus coated substrate is prebaked in a clean oven at a temperature of 90°C for 15 minutes. (Fig. 5(d)).

(5) Next, an appropriate mask 30 is placed on the resist coated metallic film 11 which is then exposed to light at 60 J/m² (6 mj/cm² (Fig. 5(e)).

(6) Next, the front board substrate is immersed for 40 sec. in a solution which is prepared by diluting developer (MICROPOSIT (R) DEVELOPER MF-312 produced by Shipley Corp.) with $H_2O$ at a ratio of 1:1 so that it is developed. Thereafter, it is washed with water (Fig. 5(f)).

(7) Next, the front board substrate is immersed for 40 sec. at a temperature of 35 °C in a solution which is prepared by mixing an etching liquid ($H_3PO_4$ + $HNO_3$ + $CH_3COOH$ + $H_2O$) at a volumetric ratio (16:1:2:1) so that the exposed aluminium film is removed. Thereafter, it is washed with water. Thus, both the hologram portion building area 6 and the optical recording portion building area 7 are subjected to etching simultaneously (Fig. 5(g)).

(8) To facilitate removal the photoresist 16 is subjected to exposure again at 1000 J/m² (100 mj/cm²) and the front board substrate is immersed for 1 sec. in a solution which is prepared by diluting remover (MICROPOSIT (R) REMOVER 1112A produced by Shipley Corp.) with $H_2O$ at a ratio of 1:3. Then, it is washed with water and thereafter it is dried (Fig. 5(h)).

(9) The front surface of a rear board substrate, which will go to form a number of rear boards 3, of polyethyleneterephthalate or the like which has a required design placed thereon, has previously been coated with urethane based thermoplastic adhesive 15 and dried. The rear surface of the front board substrate is superimposed on the thus prepared front surface of the rear board substrate and they are then subjected to heating and pressing for 10 min at 100 °C and $2 \times 10^5$ kg/m$^2$ (20 kg/cm2). Thus, they are adhered to one another (Fig. 5(i)).

(10) Finally, the thus adhered assembly is cut to ordinary card shapes (Fig. 5(j)).

Thus, the optical recording card 1b is completed by way of the steps mentioned above.

Since, the pattern of concavity and convexity 8 is formed directly on the transparent front board 2 in order to be utilized as the structural part for a hologram, in accordance with this method of producing the optical recording card 1b, a common material can be used and thereby the number of structural components can be reduced. Furthermore, since the reflective metallic films for both the hologram portion and the optical recording portion are formed by common metallic evaporation and common etching processes, the number of production steps can be reduced. As, a result, the optical recording card can be produced inexpensively.

Next, an optical recording card 1d having a hologram contained therein in accordance with another embodiment of the present invention will be described.

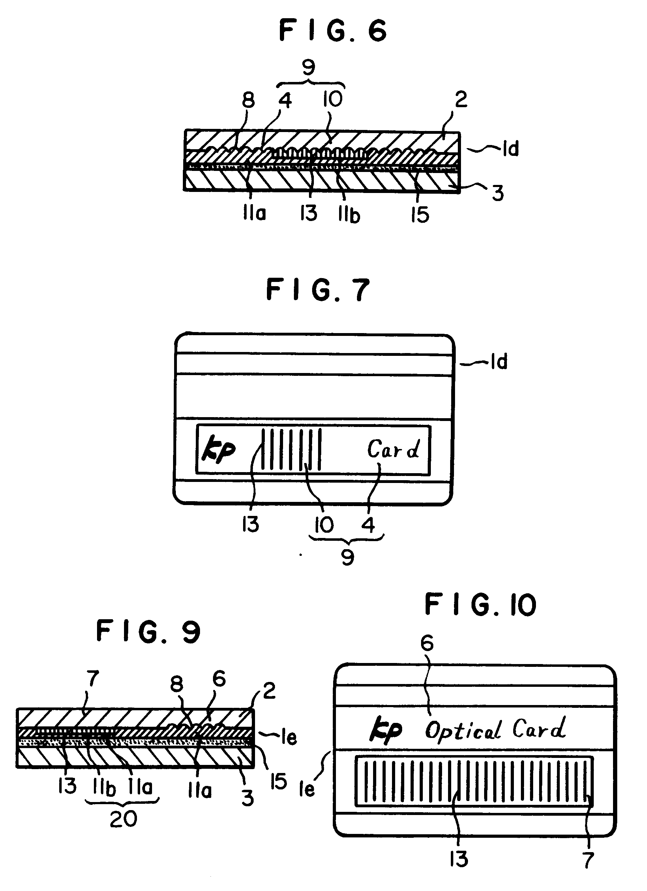

In Fig. 6 and 7, reference numeral 1d designates an optical recording card having a hologram included therein (hereinafter referred to as optical recording card for simplicity). The optical recording card 1d includes an information recording portion building area 9 between two card boards, that is, between the front board 2 and the rear board 3, so that it is composed of a hologram portion 4 and a hologram portion-optical recording portion 10. The front board 2 is constituted by a transparent thermoplastic resin such as polycarbonate, polymethylmethacrylate (PMMA) or the like, while the rear board 3 is constituted by resinous material such as polycarbonate, polymethylmethacrylate, polyvinyl chloride, epoxy, polyethyleneterephthalate or the like.

An optical recording pattern layer 11b has a thickness in the range of about $1 \times 10^{-7}$ to $2 \times 10^{-6}$ m (0.1 to 2.0 microns) and is constituted by material which is absorptive for invisible light, such as infrared, ultraviolet or the like, but is transparent for visible light. Accordingly, the optical recording pattern layer 11b can not be recognized by normal illumination with visible light, but optical information contained in the optical recording pattern layers 11b can be read with the use of a reading machine in which infrared or ultraviolet rays are used as light sources.

Suitable materials the optical recording pattern layer 11b, are paints or inks prepared by dissolving an infrared ray absorbing agent or an ultraviolet ray absorbing agent into a binder, in a proportion of 0.01% to 20%.

Typical infrared ray absorbing agents are:

| | |
|---|---|
| PA-1005 | (produced by Mitsui Toatsu Chemicals, Inc.) |
| PA-1006 | (produced by Mitsui Toatsu Chemicals, Inc.) |
| IR-750 | (produced by Nippon Kayaku Co., Ltd.) |
| IR-820 | (produced by Nippon Kayaku Co., Ltd.) |
| IRG-002 | (produced by Nippon Kayaku Co., Ltd.) |
| IRG-003 | (produced by Nippon Kayaku Co., Ltd.) |

Typical ultraviolet ray absorbing agents are :

| | |
|---|---|
| Tinuvin | (produced by CIBA-GEIGY Ltd., trade name) |
| Uvinul | (produced by General Aniline & Film Corp., trade name) |
| Cyasorb | (produced by American Cyanamid Co., trade name) |

As a suitable binder, the following binder having photosensibility or having no photosensibility is usable.

FVR

(transparent photosensitive resin, produced by Fuji Chemicals Co., Ltd.)

SEMICOFINE SP-910

(transparent thermosetting resin, produced by Toray Industries, Inc.)

As patterning methods photolithography (in the case of binder having photosensibility), photoetching (in the case of binder having no photosensibility) and printing are employable.

The whole area ranging from the optical recording pattern layer 11b to the information recording portion building area 9 is covered with reflective metallic film 11a, such as aluminium evaporation film. The surface of the reflective metallic film 11a is covered with the rear board 3 with polyester based or urethane based thermoplastic adhesive 15 interposed therebetween. A reflective type hologram is constituted from the combination of the pattern of concavity and convexity 8 on the front board 2 with the reflective metallic film 11a. Accordingly, the hologram portion 4 in the information recording portion building area 9 is constituted by a combination of the pattern of concavity and convexity 8 on the front board 2 and the reflective metallic film 11a, while the hologram portion-optical recording portion 10 is constituted by a combination of the pattern of concavity and convexity 8 on the front board 2, the optical recording pattern layer 11b and the reflective metallic film 11a.

When the information recording portion building area 9 is irradiated with visible light through the surface of the front board of the optical recording portion building area, the light is diffracted at the concavity and convexity 8 in several directions. Among the thus diffracted light there are some light waves having the same amplitude and phase as those of the light wave fronts which have previously been recorded, and this light causes the recorded image to be reproduced. The optical recording pattern layer 11b is transparent for visible light, and thus it does not inhibit the reproduction and image from the hologram. At this time the optical recording pattern 11b is invisible and therefore it can not be recognized visually. When infrared or ultraviolet rays are used as the reading light to irradiate the hologram portion-optical recording portion 10, the optical recording pattern layer 11b can be read from the reflected light.

Since the optical recording card 1d is such that both the hologram portion 4 and the hologram portion-optical recording portion 10 are superimposed, a much greater density of information can be contained in the optical recording card. Falsification or alteration of the optical recording card can only be achieved by working on either or both of the hologram portion 4 and the hologram portion-optical recording portion 10. However, since the hologram portion-optical recording portion 10 is invisible and working on one portion results in breakage or damage of the other one, it is difficult to work on them manually. Thus falsification and alteration of the optical recording card 1d can be prevented.

Production of the optical recording card 1d is described below.

(1) When the optical recording card 1d is to be produced, a front board substrate, which will go to form a number of front boards 2 constituted of transparent thermoplastic resin such as polycarbonate, polymethylmethacrylate or the like is provided as shown in Fig. 8 (Fig. 8 (a)).

(2) A pattern of concavity and convexity 8, representing interference fringes of a hologram, is die pressed in each information recording portion building area 9 by hot stamping (Fig. 8 (b)). It should be noted that the front board substrate having patterns of concavity and convexity 8 of the typed resulting from steps (1) and (2) may be produced by injection molding.

(3) Next, the front board substrate is roll coated with a solution which is prepared by mixing together $1 \times 10^{-3}$ kg (1g) of near-infrared absorbing agent NK-2865 produced by NIPPON KANKOH-SHIKISO KENKYUSHO Co., Ltd., $1 \times 10^{-1}$ kg (100g) of photosensitive agent R 100 produced by Fuji Chemicals Industrial Co., Ltd. and $10^{-2}$ kg (10g) of 10% solution of ammonium dichoromate until a dried film has a thickness of

$2 \times 10^{-6}$ m (2 microns) (Fig. 8(c)).

(4) Next, an appropriate mask 30 is placed on the front board substrate and it is then exposed to light at 500 $J/m^2$ (50 $mj/cm^2$) (Fig. 8(d)).

(5) Next, the front board substrate is immersed for 60 sec at a temperature of 35 °C in liquid $H_2O$ so that developing is effected. Thereafter, it is subjected to postbaking in a clean oven at a temperature of 120 °C for 30 minutes, whereby an optical recording pattern layer 11b is formed (fig. 8(e)).

(6) Next, an aluminium film 11 is formed over the hologram portion building area 6 and the optical recording portion building area 7 on the optical recording pattern layer 11b by vacuum evaporation at a vacuum of 266.64 $\times 10^{-5}$ Pa ($2 \times 10^{-5}$ Torr) and evaporation speed of $2 \times 10^{-9}$ m/s (20 Å/sec) until the aluminium film has a thickness of $10^{-7}$ m (1000 Å) (Fig. 8(f)).

(7) The front surface or a rear board substrate of polyesterterephthalate or the like having a required pattern placed thereon, has been coated previously with urethane based thermoplastic adhesive 15 and dried. The rear surface of the front board substrate is superimposed on the thus prepared front surface of the rear board substrate and they are then subjected to heating and pressing for 10 minutes at 100 °C and $2 \times 10$ kg/$M^2$ (20 kg/$cm^2$). (Fig. 8(g)).

(8) Finally, the thus adhered assembly is cut to ordinary card shapes (Fig. 8(h)).

Thus, the optical recording card 1d is completed by way of the steps as mentioned above.

Since the pattern of concavity and convexity 8 is formed directly on the transparent front board 2, to be utilized as the structural part for a hologram in accordance with the above method, a common material can be used and thereby the number of structural components as well as the number of production steps can be reduced. As a result, the optical recording card can be advantageously produced inexpensively.

An optical recording card 1e having a hologram contained therein in accordance with another embodiment of the present invention is described below.

In Fig. 9 and 10 reference numeral 1e denotes an optical recording card having a hologram contained therein (hereinafter referred to as optical recording card for the purpose of simplicity). The optical recording card 1e includes a hologram portion building area 6 and an optical recording portion building area 7 between two card boards, that is, between the front board 2 and the rear board 3. The front board 2 is constituted of a transparent thermoplastic resin such as polycarbonate, polymethylmethacrylate or the like, while the rear board 3 is constituted by resinous material such as polycarbonate, polymethylmethacrylate, polyvinyl-chloride, epoxy, polyethyleneterephthalate or the like.

A pattern of concavity and convexity 8, representing interference fringes of a hologram, is formed on the rear surface of the front board 2 in the hologram portion building area 6. The optical recording portion building area 7 is covered with an optical recording member 20. The optical recording member 20 is constituted by an optical recording pattern layer 11b and a reflective metallic film 11a. The optical recording pattern 11b is constituted by material which is absorptive for invisible light, such as infrared or ultraviolet, and is transparent for visible light. In the case where the optical recording pattern layer 11b is constituted by material which is absorptive for infrared or ultraviolet light it can not be visually recognized by normal irradiation with visible light but optical information contained in the optical recording pattern layer 11b can be read by means of a reading machine which employs infrared of ultraviolet rays as the reading light.

Materials suitable for such an invisible optical recording pattern layer 11b are identical to the infrared ray absorbing agents and ultraviolet absorbing agents used for the optical recording card 1d.

The whole area including the hologram portion building area 6 and the optical recording portion building area 7 on the optical recording pattern layer 11b is covered with reflective metallic film 11a, such as aluminium vacuum evaporated film. The surface of the reflective metallic film 11a is covered with the rear board 3, with a layer of polyester based or urethane based thermoplastic adhesive 15 interposed therebetween. The pattern of concavity and convexity 8 and the reflective metallic film 11a on the front board 2 together form a reflective type hologram. Accordingly, the hologram portion building 6 area constituted by the pattern of concavity and convexity 8 and the reflective metallic film 11a on the front board, while the optical recording portion building area 7 consists of the optical recording pattern layer 11b and the reflective metallic film 11a.

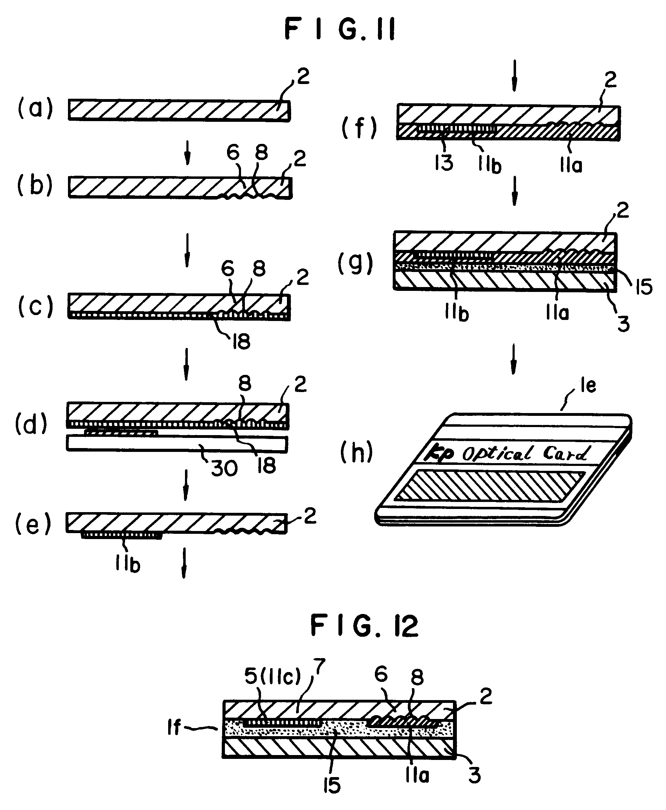

As shown in Fig 12, an optical recording card 1f including a hologram contained therein may be constituted by forming a reflective metallic film 11a and then by forming an optical recording pattern layer 11c using material such as infrared ray absorbing agent, ultraviolet ray absorbing agent or the like which is absorptive for invisible light and transparent for visible light.

Next, a method of producing the optical recording card 1e will be described

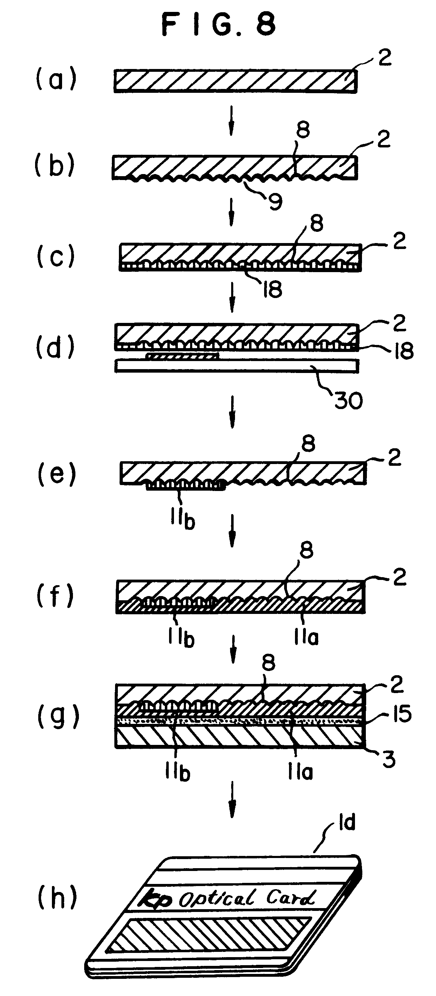

(1) When the optical recording card 1e is to be produced, a front board substrate, which will go to form a number of front boards 2, made of a transparent thermoplastic resin such as polycarbonate, polymethylmethacrylate (PMMA) or the like is prepared as shown in Fig. 11 (Fig. 11(a)).

(2) A pattern of concavity and convexity 8, representing interference fringes of a hologram, is die pressed in the hologram portion building area 6 on the front board substrate by hot stamping (Fig 11(b)). Incidentally, a front board substrate having a pattern of concavity and convexity 8 of the kind obtained by steps (1) and (2) may be produced by injection molding.

(3) Next, the front board substrate is roll coated with a solution which is prepared by mixing together $1 \times 10^{-3}$ kg (1g) of near-infrared absorbing agent NK-2865 produced by NIPPON KANKOH-SHIKISO KENKYUSHO Co., Ltd., $10^{-1}$ kg (100g) of photosensitive agent R 100 produced by Fuji Chemicals Industrial Co., Ltd. and $10^{-2}$ kg (log) of 10% solution of ammonium dichromate, until a dried film has a thickness of $2 \times 10^{-6}$ m (2 microns) (Fig. 11(c)).

(4) Next, an appropriate mask 30 is placed on the front board substrate which is then exposed to light at 500 J/m$^2$ (50 mj/cm$^2$) (Fig. 11(d)).

(5) Next, the front board substrate is immersed for 60 sec. at a temperature of 35°C in liquid $H_2O$ so that developing is effected. Thereafter, it is subjected to postbaking in a clean oven at a temperature of 120 °C for 30 min. whereby an optical recording pattern layer 11b is formed (Fig. 11(e)).

(6) Next, an aluminium film 11 is formed over the hologram portion building area 6 and the optical recording portion building area 7 on the optical recording pattern layer 11b by vacuum evaporation at a vacuum of 266.64 x $10^{-5}$ Pa (2 x $10^{-5}$ Torr) and an evaporation speed of 2 x $10^{-9}$ m/s (20 Å/sec) until the aluminium film has a thickness of $10^{-7}$ m (1000 Å) (Fig. 11(f)).

(7) The front surface of the rear board substrate of polyesterterephthalate or the like which has a required design placed thereon has previously been coated with urethane based thermoplastic adhesive 15 and dried. The rear surface of the front board substrate is superimposed on the thus prepared front surface of the rear board substrate and they are then subjected to heating and pressing for 10 min. at 100°C and 2 x $10^{-5}$ kg/m$^2$ (20 Kg/cm$^2$) (Fig. 11(g)).

(8) Finally, the thus adhered assembly is cut to ordinary card shapes (Fig. 11(h)).

Thus, the optical recording card 1e is completed by way of the steps as mentioned above.

When the hologram portion building area 6 is irradiated with visible light through the surface of the front board 2 of the optical recording card 1e as constructed in the above-described manner, it is diffracted in several directions due to the presence of the pattern of concavity and convexity 8. Among the thus diffracted light there are light waves of the same amplitude and phase as those of the wave front of the previously recorded light, causing the recorded image can be reproduced.

In the case where the optical recording pattern layer 11b consists of material which is absorptive for infrared or ultraviolet light, it cannot be visually recognized because it is transparent for visible light. However, when it is irradiated with infrared or ultraviolet light and reflected light therefrom is received, the content recorded in the optical recording pattern layer 11b can be read.

Since the optical recording card 1e as so constructed has both recording areas comprising the hologram portion building area 6 and the optical recording portion building area 7, the result is that the density of information which can be contained in a certification card is greatly increased. Furthermore, falsification or alteration of the certification card can be achieved only by working on either one or both of the hologram portion building area 6 and the optical recording portion building area 7. Since working on one area results in breakage or damage of the other one and it is difficult to treat or process them manually, falsification and alteration of the card can be prevented. Thus, even though a hologram is added to an optical recording card, the whole structure does not become complicated, the number of components is not doubled and similarly, the number of production steps does not increase in a simple additive matter. This makes difficult falsification and alteration of such a card.

## Claims

1. An optical recording card (1b, 1d, 1e, 1f) having a hologram contained therein comprising:

   a transparent card front board (2); an optical recording portion building area (7) located on the rear surface of the front board including an optical recording pattern layer (11b, 11c) having optical information pits (13);

   a hologram portion building area (6);

   a card rear board (3) adapted to be adhered to said card front board to sandwich said optical recording pattern layer (11b, 11c) and said hologram portion building area (6);

   characterized in that:

   said hologram portion building area (6) is formed with a pattern of concavity and convexity (8) in the form of an interference fringe in a hologram;

   said hologram portion building area (6) is located on the rear surface of the card front board (2); and

   a reflective metal layer (11a) is deposited on the rear of said card front board (2) to cover said hologram portion building area and to comprise reflecting portions of said optical recording portion building area (7).

2. An optical recording card (1b, 1e, 1f) having a hologram contained therein as defined in Claim 1, wherein said hologram portion building area (6) is located apart from said optical recording portion building area (7).

3. An optical recording card (1d) having a hologram contained therein as defined in Claim 1, wherein a part of said hologram portion building area (6) is superposed on said optical recording portion building area (7).

4. An optical recording card (1b) having a hologram contained therein as defined in either of Claim 1 or 2, wherein said optical information pits (13) are comprised of a part of said reflective metal layer (11a).

5. An optical recording card (1d, 1e, 1f) having a hologram contained therein as defined in any of Claims 1 to 3, wherein said optical information pits (13) are comprised of material which absorbs infra-red or ultra-violet light but is transparent for visible light.

6. A method of producing an optical recording card (1b) having a hologram contained therein, comprising the steps of:

   die pressing a pattern of concavity and convexity (8) in the form of an interference fringe in a hologram portion building area (6) on the rear surface of a transparent front substrate, said rear surface also containing an optical recording portion building area (7);

   forming a reflective metal film (11) over said hologram portion building area (6) and said optical recording portion building area (7);

   coating a resist (16) over said reflective metal film (11); patterning said resist (16) at said hologram portion building area (6) and said optical recording portion building area (7) by irradiation through a mask (30);

   forming said optical recording pattern layer (11b) and reflective metal layer (11a) by etching;

   removing residual resist (16);

   adhering said inside surface of the front substrate to a rear substrate so as to sandwich said optical recording pattern layer (11b) and said reflective metal layer (11a); and die punching to a card shape.

7. A method of producing an optical recording card (1b) having a hologram contained therein, comprising the steps of:

die pressing a pattern of concavity and convexity (8) in the form of an interference fringe in a hologram portion building area (6) on the rear surface of a transparent front substrate, said rear surface also containing an optical recording portion building area (7);

forming optical information pits (13) of an optical recording pattern layer (11b, 11c) by use of paint or ink transparent to visible light but absorbent for ultra-violet or infrared light;

forming a reflective metal film (11) over said hologram portion building area (6) and said optical recording portion building area (7) by vacuum evaporation;

adhering said inside surface of the front substrate to a rear substrate so as to sandwich said optical recording pattern layer (11b) and said reflective metal layer (11a); and

die punching to a card shape.

**8.** A method of producing a optical recording card (1d, 1e, 1f) having a hologram contained therein as defined in Claim 7, wherein said paint or ink comprises a photo-sensitive resin and an agent which absorbs infra-red or ultra-violet light dispersed in said resin, and wherein said optical information pits (13) are formed by patterning said paint or ink in accordance with a mask (30).

**9.** A method of producing an optical recording card (1d, 1e, 1f) having a hologram contained therein as defined in Claim 7, wherein said optical recording pattern layer (11b, 11c) is printed in paint or ink which comprises infrared or ultraviolet absorbing dye dispersed in binder.

**Patentansprüche**

**1.** Optische Aufzeichnungskarte (1b, 1d, 1e, 1f) mit einem darin enthaltenen Hologramm, enthaltend:

eine transparente Kartenvordertafel (2); einen an der hinteren Oberfläche der Vordertafel angeordneten optischen Aufzeichnungsabschnittsbaubereich (7) unter Einschluß einer optischen Aufzeichnungsmusterschicht (11b, 11c) mit optischen Informationsvertiefungen (13);

einen Hologrammabschnittsbaubereich (6); eine zur Anbringung an der Kartenvordertafel angepaßte Kartenrücktafel (3) zum Einschließen der optischen Aufzeichnungsmusterschicht (11b, 11c) und des Hologrammabschnittsbaubereichs (6);

dadurch gekennzeichnet, daß

der Hologrammabschnittsbaubereich (6) mit einem Konkavitäts- und Konvexitätsmuster (8) in der Form eines Interferenzmusters in einem Hologramm gebildet ist,

der Hologrammabschnittsbaubereich (6) auf der hinteren Oberfläche der Kartenvordertafel (2) angeordnet ist; und

eine reflektierende Metallschicht (11a) auf der Rückseite der Kartenvordertafel (2) aufgebracht ist, um den Hologrammabschnittsbaubereich abzudecken und reflektierende Abschnitte des optischen Aufzeichnungsabschnittsbaubereichs (7) zu umfassen.

**2.** Optische Aufzeichnungskarte (1b, 1e, 1f) mit einem darin enthaltenen Hologramm nach Anspruch 1, bei der der Hologrammabschnittsbaubereich (6) getrennt von dem optischen Aufzeichnungsabschnittsbaubereich (7) angeordnet ist.

**3.** Optische Aufzeichnungskarte (1d) mit einem darin enthaltenen Hologramm nach Anspruch 1, bei der ein Teil des Hologrammabschnittsbaubereichs (6) über den optischen Aufzeichnungsabschnittsbaubereich (7) überlagert ist.

**4.** Optische Aufzeichnungskarte (1b) mit einem darin enthaltenen Hologramm nach Anspruch 1 oder 2, bei der die optischen Aufzeichnungsvertiefungen (13) in einem Teil der reflektierenden Metallschicht (11a) enthalten sind.

**5.** Optische Aufzeichnungskarte (1d, 1e, 1f) mit einem darin enthaltenen Hologramm nach einem der Ansprüche 1 bis 3, bei der die optischen Aufzeichnungsvertiefungen (13) aus einem Material bestehen, das infrarotes oder ultraviolettes Licht absorbiert, für sichtbares Licht aber transparent ist.

**6.** Verfahren zum Herstellen einer optischen Aufzeichnungskarte (1b) mit einem darin enthaltenen Hologramm, enthaltend folgende Schritte:

ein Muster (8) aus Vertiefungen und Erhöhungen wird in der Form eines Interferenzmusters in einem Hologrammabschnittsbaubereich (6) auf der hinteren Oberfläche eines transparenten Vordersubstrats formgepreßt, wobei die hintere Oberfläche ebenfalls einen optischen Aufzeichnungsabschnittsbaubereich (7) enthält;

es wird ein reflektierender Metallfilm (11) über dem Hologrammabschnittsbaubereich (6) und dem optischen Aufzeichnungsabschnittsbaubereich (7) gebildet;

es wird eine Abdeckung (16) über dem reflektierenden Metallfilm (11) beschichtet und die Abdeckung (16) an dem Hologrammabschnittsbaubereich (6) und dem optischen Aufzeichnungsabschnittsbaubereich (7) durch Bestrahlung durch eine Maske (30) hindurch mit einem Muster versehen;

die optische Aufzeichnungsmusterschicht (11b) und die reflektierende Metallschicht (11a) werden durch Ätzen geformt;

die Restabdeckung (16) wird entfernt;

die innere Oberfläche des Vordersubstrats wird an einem Rücksubstrat angebracht, um auf diese Weise die optische Aufzeichnungsmusterschicht (11b) und die reflektierende Metallschicht (11a) dazwischen einzuschließen; und die Substate werden in eine Kartenform gestanzt.

7. Verfahren zum Herstellen einer optischen Aufzeichnungskarte (1b) mit einem darin enthaltenen Hologramm, enthaltend folgende Verfahrensschritte:

auf die hintere Oberfläche eines transparenten Frontsubstats wird ein Muster (8) von konkaven und konvexen Ausbildungen in der Form eines Interferenzmusters in einem Hologrammabschnittsbaubereich (6) gesenkgepreßt, wobei die hintere Oberfläche ebenfalls einen optischen Aufzeichnungsabschnittsbaubereich (7) enthält;

optische Informationsvertiefungen (13) einer optischen Aufzeichnungsmusterschicht (11b, 11c) werden durch die Verwendung einer Farbe oder Tinte gebildet, die für sichtbares Licht transparent, für ultraviolettes oder infrarotes Licht aber absorbierend ist;

über dem Hologrammabschnittsbaubereich (6) und dem optischen Aufzeichnungsabschnittsbaubereich (7) wird ein reflektierender Metallfilm durch Vakuumverdampfung gebildet;

die innere Oberfläche des vorderen Substrats wird an einem hinteren Substrat angebracht, um so die optische Aufzeichnungsmusterschicht (11b) und die reflektierende Metallschicht (11a) einzuschließen und die Substrate werden in Kartenform gestanzt.

8. Verfahren zum Herstellen einer optischen Aufzeichnungskarte (1d, 1e, 1f) mit einem darin enthaltenen Hologramm nach Anspruch 7, wobei die Farbe oder Tinte ein lichtempfindliches Harz und ein Agens enthält, das in dem Harz gestreutes infrarotes oder ultraviolettes Licht absorbiert, und wobei die optischen Informationsvertiefungen (13) durch Musterbildung der Farbe oder der Tinte in Übereinstimmung mit einer Maske (30) gebildet werden.

9. Verfahren zum Herstellen einer optischen Aufzeichnungskarte (1d, 1e, 1f) mit einem darin enthaltenen Hologramm nach Anspruch 7, wobei die optische Aufzeichnungsmusterschicht (11b, 11c) in Farbe oder Tinte gedruckt wird, die in einem Bindemittel dispergierte infrarot- oder ultarviolettabsorbierende Färbung enthält.

**Revendications**

1. Une carte (1b, 1d, 1e, 1f) d'enregistrement optique, contenant un hologramme, comprenant :

une pellicule frontale transparente (2) de carte; une zone (7) constituant une partie d'enregistrement optique située sur la surface arrière de la pellicule frontale comprenant une couche de configuration d'enregistrement optique (11b, 11c) comportant des puits d'information (13);

une zone (6) constituant une partie d'hologramme;

une pellicule arrière de carte (3) apte à être collée sur ladite pellicule frontale de carte pour prendre en sandwich ladite couche de configuration d'enregistrement optique (11b, 11c) et ladite zone (6) constituant une partie d'hologramme;

caractérisée en ce que :

ladite zone (6) constituant une partie d'hologramme comporte une configuration (8) de concavité et de convexité sous forme d'une frange d'interférences dans un hologramme;

ladite zone (6) constituant une partie d'hologramme est située sur la surface arrière de la pellicule frontale (2) de carte; et

une couche métallique réfléchissante (11a) est déposée sur l'arrière de la pellicule frontale (2) de carte pour couvrir ladite zone constituant la partie d'hologramme et pour comprendre les parties réfléchissantes de ladite zone (7) constituant la partie d'enregistrement optique.

2. Une carte d'enregistrement optique (1b, 1e, 1f) contenant un hologramme selon la revendication 1, dans laquelle ladite zone (6) constituant une partie d'hologramme est située à l'écart de ladite zone (7) constituant une partie d'enregistrement optique.

3. Une carte d'enregistrement optique (1d) contenant un hologramme selon la revendication 1, dans laquelle une partie de ladite zone (6) constituant une partie d'hologramme est superposée à ladite zone (7) constituant une partie d'enregistrement optique.

4. Une carte d'enregistrement optique (1b) contenant un hologramme selon l'une des revendications 1 ou 2, dans lequel lesdits puits (13) d'information optique sont constitués d'une partie de la couche métallique réfléchissante (11a).

5.  Une carte d'enregistrement optique (1d, 1e, 1f) contenant un hologramme selon l'une des revendications 1 à 3, dans laquelle lesdits puits (13) d'information optique sont constitués d'une matière qui absorbe une lumière infra-rouge ou ultra-violette mais est transparente à la lumière visible.

6.  Un procédé de production d'une carte d'enregistrement optique (1b) contenant un hologramme, comprenant les étapes consistant à :
    estamper à chaud une configuration (8) de concavité et de convexité sous forme d'une frange d'interférences dans une zone (6) constituant une partie d'hologramme sur la surface arrière d'un substrat frontal transparent, ladite surface arrière contenant aussi une zone (7) constituant une partie d'enregistrement optique;
    former une couche métallique réfléchissante (11) au-dessus de ladite zone (6) constituant une partie d'hologramme et de ladite zone (7) constituant une partie d'enregistrement optique;
    revêtir d'une résine (16) ladite couche métallique réfléchissante (11); configurer ladite résine (16) au-dessus de ladite zone (6) constituant la partie d'hologramme et de ladite zone (7) constituant la partie d'enregistrement optique en la soumettant à un rayonnement à travers un masque (30);
    former ladite couche (11b) de configuration d'enregistrement optique et ladite couche métallique réfléchissante (11a) par gravure;
    enlever la résine résiduelle (16);
    coller ladite surface intérieure du substrat frontal sur un substrat arrière de façon à prendre en sandwich ladite couche (11b) de configuration d'enregistrement optique et ladite couche métallique réfléchissante (11a); et découper à la presse en forme de carte.

7.  Un procédé de production d'une carte d'enregistrement optique (1b) contenant un hologramme, comprenant les étapes consistant à :
    estamper à chaud une configuration (8) de concavité et de convexité sous forme d'une frange d'interférences dans une zone (6) constituant une partie d'hologramme sur la surface arrière d'un substrat frontal transparent, ladite surface arrière contenant aussi une zone (7) constituant une partie d'enregistrement optique;
    former des puits (13) d'information optique d'une couche (11b, 11c) de configuration d'enregistrement optique en utilisant une peinture ou une encre transparente à la lumière visible mais absorbante pour la lumière ultra-violette ou infra-rouge;
    former par évaporation sous-vide une pellicule métallique réfléchissante (11) au-dessus de ladite zone (6) constituant la partie d'hologramme et de ladite zone (7) constituant la partie d'enregistrement optique;
    coller ladite surface interne du substrat avant sur un substrat arrière de façon à prendre en sandwich ladite couche (11b) de configuration d'enregistrement optique et ladite couche métallique réfléchissante (11a) et
    découper à la presse en forme de carte.

8.  Un procédé de production d'une carte d'enregistrement optique (1d, 1e, 1f), contenant un hologramme selon la revendication 7, dans lequel ladite peinture ou encre comprend une résine photo-sensible et un agent qui absorbe la lumière infra-rouge ou ultraviolette dispersé dans ladite résine, et dans lequel lesdits puits d'information optique (13) sont formés par configuration de ladite peinture ou de ladite encre selon un masque (30).

9.  Un procédé de production d'une carte d'enregistrement optique (1d, 1e, 1f) contenant un hologramme selon la revendication 7, dans lequel ladite couche de configuration d'enregistrement optique (11b, 11c) est imprimée en une peinture ou en une encre qui comprend, dispersé dans le liant, un colorant absorbant la lumière infra-rouge ou ultra-violette.

# F I G. I

**kp** Optical Card

# F I G. 2

# F I G. 3

# F I G. 4

**kp** Optical Card

# F I G. 5

(a)

(b)

(c)

(d)

(e)

(f)

(g)

(h)

(i)

(j) kp Optical Card

## F I G. 6

## F I G. 7

## F I G. 9

## F I G. 10

# FIG. 8

# F I G. 11

# F I G. 12